# EUROPÄISCHE PATENTSCHRIFT

(11) **EP 3 747 185 B1**
(45) Veröffentlichungstag und Bekanntmachung des Hinweises auf die Patenterteilung: **14.12.2022**
(21) Anmeldenummer: 19703961.3
(22) Anmeldetag: 30.01.2019
(51) Int. Cl.: H04N 5/225, B60R 11/04, H01Q 1/32

(54) **DACHANTENNE EINES FAHRZEUGES MIT EINER RÜCKFAHRKAMERA**
ROOF ANTENNA OF A VEHICLE HAVING A REVERSING CAMERA
ANTENNE DE TOIT D'UN VÉHICULE AVEC CAMÉRA DE RECUL

(30) Priorität: 30.01.2018 DE 102018101992
(43) Veröffentlichungstag der Anmeldung: 09.12.2020
(73) Patentinhaber: HIRSCHMANN CAR COMMUNICATION GMBH, 72654 Neckartenzlingen (DE)
(72) Erfinder: SILVA, David, 72622 Nürtingen (DE)
(74) Vertreter: Patentanwaltskanzlei WILHELM & BECK
(86) Internationale Anmeldenummer: PCT/EP2019/052219
(87) Internationale Veröffentlichungsnummer: WO 2019/149741

(56) Entgegenhaltungen:
- WO-A1-2017/046971
- JP-A- 2005 193 733
- JP-A- 2016 116 048
- US-A1- 2015 307 026

## Beschreibung

Die Erfindung betrifft eine Dachantenne, aufweisend eine Bodenplatte, wobei auf der Bodenplatte zumindest ein unter einer mit der Bodenplatte in Wirkverbindung stehendende Haube untergebrachtes Antennenelement zum Empfangen und/oder Senden hochfrequenter Signale angeordnet ist und die Bodenplatte Befestigungsmittel zum Anordnen und Befestigen der Dachantenne an ihrem bestimmungsgemäßen Anbauort aufweist, wobei die Dachantenne eine unter der Haube angeordnete Kamera und die Haube eine Ausnehmung für das Erfassungsfeld der Kamera aufweist.

Eine solche Dachantenne ist bereits aus der DE 10 2015 210 449 B4 bekannt.

Bei dieser Dachantenne liegt das Problem vor, dass sich Wasser im Innenraum der Dachantenne bzw. innerhalb der Haube bilden kann, wenn die Haube nicht wasserdicht ist bzw. keine dichtende Verbindung zwischen der Haube und der Bodenplatte der Dachantenne bzw. der Auflagefläche, auf der die Dachantenne montiert ist (Fahrzeugdach), gegeben ist. Insbesondere bei niedrigen Temperaturen (unter 0 °C) kann die Dachantenne durch Frost zerstört werden. Aber auch bei darüber liegenden Temperaturen wird infolge des eingedrungenen Wassers bzw. Feuchtigkeit (Kondensat) die Funktionalität der Dachantenne beeinträchtigt.

Die JP 2005 193733 A beschreibt ein an einer Decke eines Kraftfahrzeugs angeordnetes Modul, das eine Kamera und eine Kommunikationseinrichtung aufweisen kann.

Die US 2015/307026 A1 beschreibt ein an einer Außenseite eines Kraftfahrzeugs angeordnetes Modul, das eine Bilderfassungseinrichtung aufweist.

Die JP 2016 116048 A beschreibt eine Dachantenne eines Kraftfahrzeugs.

Der Erfindung liegt daher die Aufgabe zugrunde, eine verbesserte Dachantenne für ein Fahrzeug mit einer Kamera, insbesondere einer Rückfahrkamera als Einparkhilfe, bereitzustellen.

Bei dieser Aufgabe sind sehr viele Punkte zu berücksichtigen, wie die Kombination zwischen elektrischen Aufgaben (senden/empfangen hochfrequenter Signale, insbesondere unterschiedlicher Frequenzbänder), Integration der Rückfahrkamera, verschiedene Fahrzeugfarben und vieles mehr. Dies lässt die Anzahl an Varianten nach oben exponentiell wachsen.

Die vorstehend genannte Aufgabe ist durch die Merkmale des Patentanspruchs 1 gelöst.

Erfindungsgemäß ist vorgesehen, die Haube eine Außenhaube ist, wobei unter der Außenhaube eine Innenhaube angeordnet ist, innerhalb der die Kamera und das zumindest eine Antennenelement untergebracht ist. Durch diese Dachantenne mit zwei verschiedenen Hauben wird somit in vorteilhafter Weise die Wirkung erzielt, dass die eine Haube (Innenhaube) die Kamera, das zumindest eine Antennenelement und gegebenenfalls weitere Elemente, die für die Funktion der Dachantenne erforderlich sind, aufnimmt und diese Innenhaube dichtend mit der Bodenplatte der Dachantenne und/oder der Auflagefläche auf dem Dach des Fahrzeuges verbunden ist. Dadurch wird verhindert, dass in den Innenraum der Dachantenne, insbesondere innerhalb der Innenhaube, Wasser eindringen kann, Kondensat entstehen kann oder dergleichen. Diese Innenhaube kann als Standard-Innenhaube ausgebildet werden, die rationell in sehr großen Stückzahlen hergestellt werden kann, unabhängig von dem äußeren Design und der gewünschten Farbe der Dachantenne. Das äußere Design und die gewünschte Farbe kann daher mit der Außenhaube realisiert werden. Außerdem ist es nicht erforderlich, dass die Außenhaube der Dachantenne die darunterliegenden Elemente wie Kamera, Antennenelemente und gegebenenfalls weiterer Elemente gegenüber äußeren Einflüssen abdichtet, da dies mit der Innenhaube erfolgt, die hinsichtlich dieser Dichtfunktion optimiert werden kann.

Nach der Erfindung liegt also eine wirtschaftliche Lösung für eine Dachantenne mit zwei Hauben dahingehend vor, dass die Innenhaube die Kamera, die Antennenelemente und gegebenenfalls weitere Elemente dichtend vor äußeren Einflüssen schützt und dabei auf das äußere Design und die Farbe der Innenhaube keine Rücksicht genommen werden muss. Das äußere Design und die Farbe (und gegebenenfalls weitere Gestaltungsmerkmale) können somit individuell für jeden Fahrzeugtyp mittels der Außenhaube berücksichtigt werden.

Wenn die Kamera geschützt innerhalb der Innenhaube angeordnet ist, muss sichergestellt sein, dass das Erfassungsfeld der Kamera nach außen (also außerhalb der Haube der Dachantenne) für die Kamera erfassbar ist. Bezüglich nur einer einzigen Haube gemäß dem eingangs zitierten Stand der Technik erfolgt dies dadurch, dass die Haube eine Ausnehmung aufweist, durch die die Kamera nach außen schauen kann.

Nach der Erfindung wird diese Ausnehmung in der Außenhaube beibehalten. Da die Kamera innerhalb der Innenhaube angeordnet ist, muss sichergestellt werden, dass sie auch durch die zusätzliche Innenhaube nach außen schauen kann.

Es ist vorgesehen, dass die Innenhaube von einem transparenten Material gebildet ist und keine Ausnehmung für das Erfassungsfeld der Kamera aufweist. In diesem Fall ist in der Innenhaube keine Ausnehmung für das Erfassungsfeld erforderlich, da die Kamera bzw. deren Linse oder Objektiv durch das transparente Material der Innenhaube durchschauen kann. Dadurch lässt sich die Innenhaube in vorteilhafter Weise als einstückiges Bauteil herstellen und es entfällt das Einbringen einer Ausnehmung in die Innenhaube. Außerdem kann die Innenhaube optimal, auch als Standard-Innenhaube, hinsichtlich ihrer Dichtwirkung im Zusammenwirken mit der Bodenplatte und/oder der Auflagefläche am Anbauort der Dachantenne auf dem Dach des Fahrzeuges gestaltet werden.

Gemäß der Erfindung mit der Innenhaube aus einem transparenten Material ergibt sich eine besonders vorteilhafte wirtschaftliche Lösung einer Dachantenne mit zwei Hauben, bei der die innere erste Haube (Innenhaube) durchsichtig ist, damit die Kamera (insbesondere die Rückfahrkamera) freie Sicht nach außen hat. Dabei ist eine gleichzeitige Bedingung die, dass die durchsichtige Haube zum Schutz der innenliegenden elektronischen Elemente (wie Kamera, Antennen, Stecker und dergleichen) wasserdicht ist und den von ihr umschlossenen Innenraum der Dachantenne vor äußeren Einflüssen, insbesondere Feuchtigkeit, Wasser, aber auch Staubpartikel oder dergleichen) zuverlässig schützt. Da die Innenhaube die Dichtfunktion erfüllt, ist es nicht mehr erforderlich, dass die zweite äußere Haube (Außenhaube) wasserdicht sein muss. Außerdem kann diese Außenhaube in jeder beliebigen Fahrzeugfarbe lackiert oder eingefärbt werden und auch dem gewünschten Design entsprechend geformt werden.

Insbesondere bei der erfindungsgemässen Dachantenne, bei der die Innenhaube aus dem transparenten Material besteht, kann daran gedacht werden, dass die eigentliche Kamera zur Erfassung des Erfassungsfeldes vollständig innerhalb der Innenhaube angeordnet ist, da sie durch das transparente Material der Innenhaube nach außen durch die Ausnehmung in der Außenhaube schauen kann. Gegebenenfalls zur Vergrößerung des Erfassungsfeldes kann in der Ausnehmung der Außenhaube, aber auch in der Sichtachse zwischen der Kamera innerhalb der Innenhaube und der Ausnehmung in der Außenhaube zwischen der Innenkontur der Außenhaube und der Außenkontur der Innenhaube eine Linse eingesetzt werden. Eine solche Linse kann beispielsweise rastend, klebend, unter Zwischenlegung eine Dichtung oder dergleichen vorzugsweise an der Außenhaube angeordnet und festgelegt werden.

In einer weiteren Ausgestaltung der Erfindung ist vorgesehen, dass der umlaufende untere Rand der Innenhaube dichtend an dem umlaufenden Rand der Bodenplatte angeordnet ist. Dadurch wird in einem bestimmten Bereich die Dichtwirkung erzielt, bei dem es sich um den getrennten Bereich der Innenhaube und der Bodenplatte handelt, bevor diese beiden Elemente bestimmungsgemäß zusammen montiert worden sind. Die Dichtung zwischen dem umlaufenden unteren Rand der Innenhaube und dem umlaufenden Rand der Bodenplatte kann zum Beispiel durch eine Presspassung, durch eine Verklebung, durch Zwischenlegung einer Dichtung und dergleichen realisiert werden.

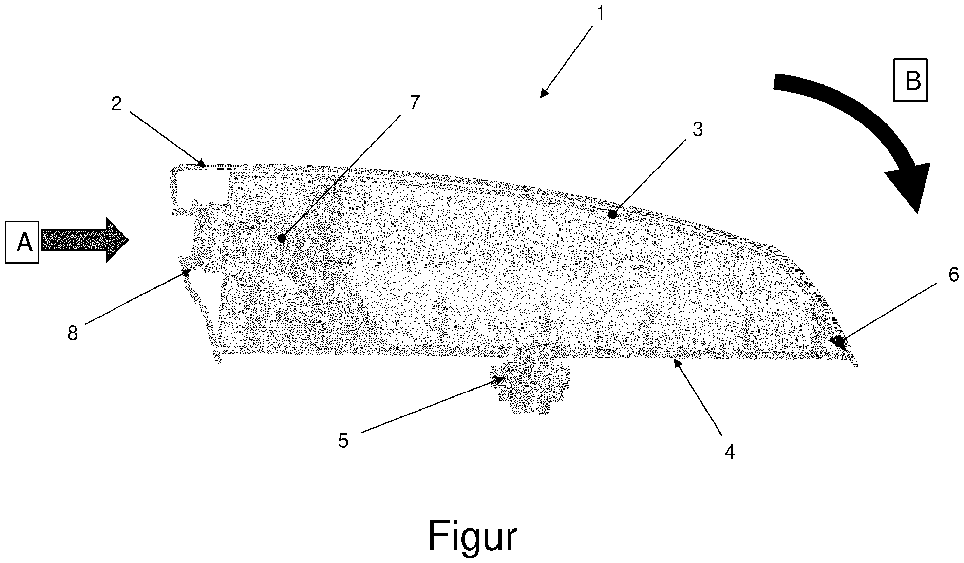

Ein besonders vorteilhaftes und in seiner Anwendung bevorzugtes Ausführungsbeispiel wird im Folgenden erläutert und anhand der einzigen Figur beschrieben.

Mit der Bezugsziffer 1 ist, soweit im Einzelnen dargestellt, eine Dachantenne versehen, die an einem entsprechenden Karosserieteil des Fahrzeuges, nämlich einem Dach (gegebenenfalls alternativ auch auf anderen Karosserieteilen) angeordnet und befestigt wird.

Die Dachantenne 1 nach der Erfindung weist eine Außenhaube 2 auf, die die äußere Kontur der Dachantenne 1 bildet. Im Falle dieses Ausführungsbeispiele ist die Außenhaube 2 mit einer vorgebbaren Geometrie versehen und in einer gewünschten Wagenfarbe lackiert.

Innerhalb der Außenhaube 2 ist eine Innenhaube 3 angeordnet, wobei diese Innenhaube 3 aus einem transparenten Material, insbesondere einem Polycarbonat, besteht.

Weiterhin weist die Dachantenne 1 eine Bodenplatte 4 auf, an der Befestigungsmittel 5 angeordnet sind. Die Befestigungsmittel 5 können gegebenenfalls auch losgelöst von der Bodenplatte 4 ausgebildet sein. Über die Unterseite der Bodenplatte 4 wird die Dachantenne an dem gewünschten Anbauort aufgelegt und mit den Befestigungsmitteln 5 dauerhaft lösbar oder unlösbar insbesondere auf dem Dach des Fahrzeuges angeordnet und festgelegt. Die Festlegung der Außenhaube 2 an der transparenten Innenhaube 3 erfolgt über eine beispielhaft dargestellte Verrastung 6. Alternativ oder ergänzend dazu können die beiden Hauben 2, 3 miteinander verklebt, verstemmt, verschweißt oder dergleichen werden.

Insbesondere auf der der Auflagefläche der Bodenplatte 4 abgewandten Fläche der Bodenplatte 4 sind eine Kamera 7 sowie weitere Elemente der Dachantenne 1, wie insbesondere Antennenelemente und der gleichen (hier nicht dargestellt), angeordnet. Außerdem sind vorhanden, aber nicht dargestellt, weitere Elemente wie Steckverbinder, Kabel und dergleichen. Die Kamera 7 kann durch eine entsprechend geformte Ausnehmung in der Außenhaube 2 durchschauen. Hierzu kann eine einfache Ausnehmung in der Außenhaube 2 vorgesehen werden. Zur Vergrößerung des Erfassungsfeldes der Kamera 7 kann beispielsweise in dieser Ausnehmung in der Außenhaube 2 eine Linse angeordnet werden, wobei diese Linse beispielsweise mittels einer Dichtung 8 in die Ausnehmung eingesetzt und dort festgelegt wird.

Bei dem in der Figur dargestellten Ausführungsbeispiel ist aufgrund einer entsprechenden Formgebung um die Ausnehmung in der Außenhaube 2 herum und einer korrespondierenden Formgebung der Innenhaube 3 eine Führung und Festlegung der Außenhaube 2 an der Innenhaube 3 durch eine bestimmte Montagereihenfolge, die im Folgenden beschrieben wird, realisiert.

Zunächst wird die Bodenplatte 4 bereitgestellt und mit der Kamera 7, dem zumindest einen (hier nicht dargestellten) Antennenelement sowie gegebenenfalls weiterer Elemente versehen. Nachdem dies erfolgt ist, wird die transparente Innenhaube 3 montiert, wobei diese Montage dichtend an der Bodenplatte 4 erfolgt, um den Raum, der von der Bodenplatte 4 und der Innenhaube 3 umschlossen ist, geschützt vor Eindringen von Wasser, Feuchtigkeit, Staubpartikeln, sonstigen Verunreinigungen und dergleichen zu schließen. Da die Bodenplatte 4 auf der Karosseriefläche (insbesondere Fahrzeugdach) des Fahrzeuges aufliegt, vorzugsweise unter Zwischenlegung eines weiteren Dichtelementes), ist auch der Bereich der Befestigungsmittel 5, in dem Stecker oder Durchführungen von Kabel vorgesehen sind, vor äußeren Einflüssen dichtend geschützt.

Nachdem dieser wesentliche Teil der Dachantenne 1 vorbereitet worden ist, kann er ohne die Außenhaube 2 oder auch schon mit der Außenhaube 2 an seinem Anbauort angeordnet und festgelegt werden. Die Montage der Außenhaube 2 erfolgt in der dargestellten Montagereihenfolge A und B. In einem 1. Schritt (Schritt A) wird die Außenhaube 2 mit ihrem einen Ende, welches dem Ende im Bereich der Verrastung 6 gegenüberliegt, im Bereich der Dichtung 8 angesetzt, wobei das Ende im Bereich der Verrastung 6 beispielsweise etwa in einem Winkel von 45° (oder gegebenenfalls kleiner oder größer) nach oben absteht. Wenn durch die entsprechende Geometrie der Anlagekonturen der Außenhaube 2 diese im Bereich der Dichtung 8 an der Innenhaube 3 geführt festlegt ist, kann in dem 2. Montageschritt B die Außenhaube 2 nach unten verschenkt werden, wobei sich das eine Ende der Außenhaube 2 dem Bereich der Verrastung 6 nähert und schließlich dort in seiner Endposition verrastet. Danach ist die Außenhaube 2 in ihrer bestimmungsgemäßen Position und umschließt die darunter liegende Innenhaube 3. Gegebenenfalls kann daran gedacht werden, dass der umlaufende untere Rand der Außenhaube 2 in der Endposition dichtend an der äußeren Kontur des umlaufenden unteren Randes der Innenhaube 3 und/oder der Oberfläche der Karosseriefläche des Fahrzeuges zur Anlage kommt.

Die Erfindung stellt also grundsätzlich eine Rückfahrkamera (insbesondere als Einparkhilfe) zur Verfügung, die in der Dachantenne integriert ist. Die Innenhaube wird aus einem durchsichtigen Material konstruiert (zum Beispiel Polycarbonat (PC)), um die Durchsicht der Rückfahrkamera nicht zu beeinträchtigen. Die Kamera "guckt" quasi durch diese Innenhaube und ist durch sie, wie auch die übrigen elektronischen Elemente, vor einem Eindringen von Wasser von außen (zum Beispiel Regenwasser), aber auch vor der Bildung von Kondenswasser geschützt.

Die 2. insbesondere lackierte Haube (Außenhaube) wird über die 1. Haube montiert und festgelegt, beispielsweise verrastet.

Zwischen den beiden Hauben wird um die Rückfahrkamera, insbesondere dem Gehäuse um die Linse der Kamera, eine Dichtung aus einem elastischen Material montiert. Somit ist die Dichtigkeit in dem Bereich gewährleistet. Der Blick der Kamera wird durch die Außenhaube nicht beeinträchtigt, da im Bereich der Linse (oder größer) ein Ausschnitt in der Außenhaube vorhanden ist. Die Dichtung kann ein separates Bauteil sein. Sie kann aber auch von der Innen- und/oder Außenhaube gebildet sein.

### Bezugszeichenliste

1. Dachantenne
2. Außenhaube
3. Innenhaube
4. Bodenplatte
5. Befestigungsmittel
6. Verrastung
7. Kamera
8. Dichtung

## Patentansprüche

1. Dachantenne (1), aufweisend eine Bodenplatte (4), wobei auf der Bodenplatte (4) zumindest ein unter einer mit der Bodenplatte (4) in Wirkverbindung stehende Haube untergebrachtes Antennenelement zum Empfangen und/oder Senden hochfrequenter Signale angeordnet ist und die Bodenplatte (4) Befestigungsmittel (5) zum Anordnen und Befestigen der Dachantenne (1) an ihrem bestimmungsgemäßen Anbauort aufweist, wobei die Dachantenne (1) eine unter der Haube angeordnete Kamera (7) und die Haube eine Ausnehmung für das Erfassungsfeld der Kamera (7) aufweist, wobei die Haube eine Außenhaube (2) ist, wobei unter der Außenhaube (2) eine Innenhaube (3) angeordnet ist, innerhalb der die Kamera (7) und das zumindest eine Antennenelement untergebracht ist, **dadurch gekennzeichnet, dass** die Innenhaube (3) von einem transparenten Material gebildet ist und keine Ausnehmung für das Erfassungsfeld der Kamera (7) aufweist.

2. Dachantenne (1) nach Anspruch 1, **dadurch gekennzeichnet, dass** der umlaufende untere Rand der Innenhaube (3) dichtend an dem umlaufenden Rand der Bodenplatte (4) angeordnet ist.

3. Dachantenne (1) nach Anspruch 1, **dadurch gekennzeichnet, dass** das transparente Material ein Polycarbonat ist.

## Claims

1. Roof antenna (1) comprising a base plate (4), with at least one antenna element for receiving and/or transmitting radiofrequency signals which is housed under a hood in operative connection with the base plate (4) being arranged on the base plate (4) and the base plate (4) comprising fastening means (5) for arranging and fastening the roof antenna (1) at its intended installation location, the roof antenna (1) comprising a camera (7) arranged under the hood and the hood having a cut-out for the detection field of the camera (7), with the hood being an external hood (2) and an internal hood (3), within which the camera (7) and the at least one antenna element are housed, being arranged below the external hood (2), **characterized in that** the internal hood (3) is formed from a transparent material and has no cut-out for the detection field of the camera (7).

2. Roof antenna (1) according to Claim 1, **characterized in that** the peripheral lower edge of the internal hood (3) is arranged at the peripheral edge of the base plate (4) in sealing fashion.

3. Roof antenna (1) according to Claim 1, **characterized in that** the transparent material is a polycarbonate.

## Revendications

1. Antenne de toit (1), comprenant un socle (4), au moins un élément d'antenne destiné à recevoir et/ou à émettre des signaux à haute fréquence, logé sous un capot qui se trouve en liaison active avec le socle (4), étant disposé sur le socle (4), et le socle (4) possédant des moyens de fixation (5) destinés à l'arrangement et à la fixation de l'antenne de toit (1) à son lieu de montage conforme à sa destination, l'antenne de toit (1) possédant une caméra (7) disposée sous le capot et le capot possédant une cavité pour le champ d'acquisition de la caméra (7), le capot étant un capot extérieur (2), un capot intérieur (3) étant disposé sous le capot extérieur (2), à l'intérieur duquel sont disposés la caméra (7) et l'au moins un élément d'antenne, **caractérisée en ce que** le capot intérieur (3) est constitué d'un matériau transparent et ne possède aucune cavité pour le champ d'acquisition de la caméra (7).

2. Antenne de toit (1) selon la revendication 1, **caractérisée en ce que** le bord inférieur circonférentiel du capot intérieur (3) est disposé de manière étanche sur le bord circonférentiel du socle (4).

3. Antenne de toit (1) selon la revendication 1, **caractérisée en ce que** le matériau transparent est un polycarbonate.
